(19) **Europäisches Patentamt**
**European Patent Office**
**Office européen des brevets**

(11) **EP 2 198 658 B1**

(12) **EUROPEAN PATENT SPECIFICATION**

(45) Date of publication and mention
of the grant of the patent:
**26.10.2011 Bulletin 2011/43**

(51) Int Cl.:
***H04W 52/46*** (2009.01)

(21) Application number: **08807400.0**

(22) Date of filing: **21.08.2008**

(86) International application number:
**PCT/IB2008/053364**

(87) International publication number:
**WO 2009/027911 (05.03.2009 Gazette 2009/10)**

(54) **A METHOD OF REDUCING OCCURRENCE OF MASKED NODES, A NODE AND A COMPUTER PROGRAM PRODUCT THEREFOR**

VERFAHREN ZUR REDUZIERUNG DES AUFTRETENS MASKIERTER KNOTEN SOWIE KNOTEN UND COMPUTERPROGRAMMPRODUKT DAFÜR

PROCÉDÉ DE RÉDUCTION D'OCCURRENCE DE NOEUDS MASQUÉS, NOEUD ET PRODUIT PROGRAMME D'ORDINATEUR CORRESPONDANTS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **31.08.2007 EP 07301335**

(43) Date of publication of application:
**23.06.2010 Bulletin 2010/25**

(73) Proprietor: **Koninklijke Philips Electronics N.V.**
**5621 AE Eindhoven (NL)**

(72) Inventors:
• **WANG, Xiangyu**
**NL-5656 AE Eindhoven (NL)**
• **ZAPPATERRA, Luca**
**NL-5656 AE Eindhoven (NL)**

(74) Representative: **Kroeze, Johannes Antonius**
**Philips**
**Intellectual Property & Standards**
**P.O. Box 220**
**5600 AE Eindhoven (NL)**

(56) References cited:
**US-A1- 2005 058 151**

• **RAY S ET AL: "Evaluation of the masked node problem in ad hoc wireless LANs" IEEE TRANSACTIONS ON MOBILE COMPUTING, IEEE SERVICE CENTER, LOS ALAMITOS, CA, US, vol. 4, no. 5, 1 September 2005 (2005-09-01), pages 430-442, XP001512875 ISSN: 1536-1233**
• **ZHIGANG WANG ET AL: "Space and network diversity combination for masked node collision resolution in wireless ad hoc network" IEEE TRANSACTIONS ON WIRELESS COMMUNICATIONS, IEEE SERVICE CENTER, PISCATAWAY, NJ, US, vol. 6, no. 2, 1 February 2007 (2007-02-01), pages 478-485, XP011165477 ISSN: 1536-1276**

**Description**

TECHNICAL FIELD

The present invention relates to a method of reducing occurrence of masked nodes in a communication network. The invention also relates to a corresponding computer program product and a node located in the communication network.

BACKGROUND OF THE INVENTION

Ad-hoc multi-hop wireless networks, or simply ad-hoc networks, are wireless networks that transport information to a remote node purely via wireless links that are between participating wireless nodes. Ad-hoc multi-hop wireless networks have the advantage of easy deployment as no wire is required, and extended coverage as information is relayed over multi-hop connections.

Two central issues are important in ad-hoc networks. The first one is related to searching or maintaining proper routes within the networks to relay information. The second one is related to proper management of wireless medium access as all nodes within a network share the underlying wireless medium.

The problems with medium access control (MAC), in particular the IEEE 802.11 MAC, in ad-hoc networks have been identified. There are a few ill behaviours of ad-hoc networks, when MAC is not designed properly. These include broken link, fairness (i.e. giving access to nodes in a fair way), reduced throughput or long delay.

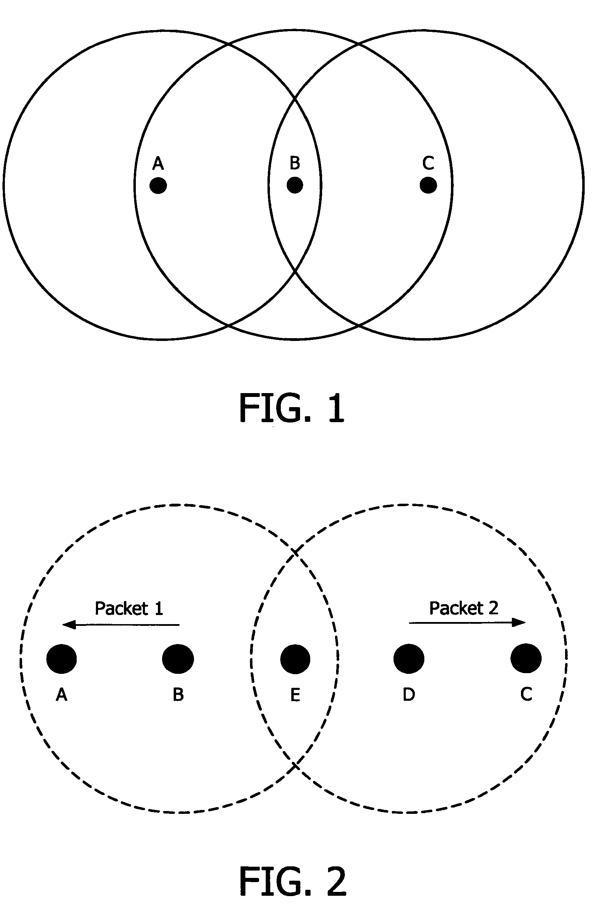

The performance of a wireless local area network (WLAN) greatly depends on its medium access control (MAC) scheme. Some WLANs, such as IEEE 802.11, use a medium access control mechanism based on carrier sense multiple access (CSMA) protocol. In accordance with the CSMA, a network node is allowed to transmit only if it determines the medium to be idle. However, CSMA is unable to prevent packet collisions caused by nodes that are located within the transmission range of the receiver, but not of the sender. Such nodes are called hidden nodes. The hidden node problem is illustrated in FIG.1. The problem occurs if at least three nodes, in this example nodes A, B and C, are operating close to each other so that A and B, as well as B and C are within radio range. If A and C send to B at the same time, the data received at node B will be corrupted. This can happen because A and C are hidden (i.e. cannot sense) from each other.

To prevent data packet collisions due to hidden nodes, a request to send (RTS)/clear to send (CTS) mechanism has been implemented in various communication systems, such as in IEEE 802.11.

The RTS/CTS mechanism is able to prevent data packet collisions when every node in the vicinity of the sender and the receiver hears at least one control packet and defers transmission appropriately. However, in ad-hoc networks this assumption does not hold in general. Neighbouring nodes often cannot receive the control packets because they are masked by ongoing transmissions from other nodes near them. This means that the RTS/CTS mechanism does not usually prevent data packet collisions, even under perfect operating conditions, such as no negligible propagation delay, no channel fading and no node mobility. In the following description a node that is supposed to receive an RTS or a CTS packet, but cannot interpret it correctly because of another ongoing transmission, is referred as a masked node. The masked node problem is illustrated in FIG.2. In this example node B transmits packet 1 to node A and node D transmits packet 2 to node C at the same time. Since node E receives packets from two different sources, it cannot decode either of the packets. Node E is said to be a masked node since each transmission masks the other.

Masked nodes are considered as fundamental as hidden nodes. When masked nodes attempt to transmit their own data, their transmissions will typically collide with on-going transmissions. Thus, collisions due to masked nodes significantly waste radio resources in wireless networks. Although the hidden nodes have been studied extensively, the masked node problem has received only little attention.

Document US 2005/0058151 published on 17.03.2005 discloses a method of reducing occurrence of masked nodes in a wireless communications network wherein when a node detects an intention of another node to establish a communications link (RTS transmission) that would interfere with the already established one, it transmits a message (OTS) to indicate to the another node an objection. The another node then has to backoff.

Thus, there is a need for an improved method of reducing the occurrence of masked nodes in communication networks.

SUMMARY OF THE INVENTION

According to a first aspect of the invention there is provided a method of reducing the occurrence of masked nodes in a communication network as claimed in claim 1.

Thus, the present invention provides an efficient way of reducing the occurrence of masked nodes and therefore interference in the network is reduced and network performance improved.

According to a second aspect of the invention there is provided a computer program product comprising instructions for implementing the method according to the first aspect of the invention when loaded and run on computer means of the second node.

According to a third aspect of the invention there is provided a node for a wireless communication network as claimed in claim 6.

Moreover, the node in accordance with the third aspect of the invention can be arranged for implementing the method according to the first aspect of the present invention.

BRIEF DESCRIPTION OF THE DRAWINGS

Other features and advantages of the invention will become apparent from the following description of non-limiting exemplary embodiments, with reference to the appended drawings, in which:

- FIG.1 illustrates the hidden node problem in a communication network;
- FIG.2 illustrates the masked node problem in a communication network;
- FIG.3 is a diagram showing simulation results;
- FIG.4 shows an architecture of the network, where the teachings of the invention can be applied;
- FIG.5 shows different messages transmitted in FIG.4 during the setup of the data communication link;
- FIG.6 is another diagram showing other simulation results;
- FIG.7 shows different messages transmitted in accordance with a first embodiment of the present invention;
- FIG.8 is a flow chart illustrating the first embodiment of the present invention;
- FIG.9 shows different messages transmitted in accordance with a second embodiment of the present invention; and
- FIG.10 is a flow chart illustrating the second embodiment of the present invention.

DETAILED DESCRIPTION OF EMBODIMENTS OF THE INVENTION

Traditional WLAN systems exploit the concept of frequency reuse defining cells and letting the adjacent ones to use different frequencies. The purpose of using different frequencies on a per-cell-basis is to limit the interference coming from neighbouring cells (co-channel interference).

The continuous increase in demand of user capacity and bandwidth efficiency in WLANs pushes to study new strategies to optimise the radio spectrum efficiency that is defined by the number of bits successfully transmitted in a given time period, within a given frequency band occupied in a certain area.

Virtual cellular network (VCN) is a possible way to improve the spectrum efficiency. It consists of a cellular communication architecture that uses the entire frequency band for each communication link. Moreover, in this concept there are no conventional base stations that manage channel assignments and handovers.

Some embodiments of the present invention are next described in the context of VCNs that use a synchronised contention-based protocol. The protocol divides the time into two periods: one control period (CP) and one data period (DP). In the control period, only control packets, such as RTS/CTS, are exchanged to establish data transmissions between pairs of source and destination nodes; and in the data period actual data transmissions take place. This protocol resembles the common channel framework in the current IEEE 802.11s draft (IEEE 802.11s Task Group, "IEEE P802.11s: ESS Mesh Networking", Draft version 0.03, Section 9.14, August 2006), except that here only one channel is used. However, it is to be noted that the teachings of the invention are not restricted to this specific network type.

Simulations have been performed in the above described network consisting of a few access points (APs) and a few stations (STAs) per AP. A node in the communication network is called a device that is able to receive and/or transmit data. Examples of nodes are access points and stations, such as mobile phones or computers. The goal is to show how many nodes send data in the same DP in relation to the CP length. As to the way to collect how many nodes are sending data at the same time, it is useful to register two statistics:

- *Data sent per cycle:* it represents the number of nodes inside 25 cells that are sending data packets in the same DP; these nodes are the ones that successfully completed an RTS/CTS exchange to reserve the medium in the CP before, so they can now transmit data. Because of the bottleneck of the infrastructure mode, the ideal maximum number is 25 parallel transmissions.
- *Data correctly received per cycle:* it collects the number of data packets sent and acknowledged in the same DP. The values are always inferior to data sent per cycle because interference aggravates the performance, especially in the simulated scenario where long data packets are used.

Statistics are collected by letting the network operate for 2 seconds and averaging the values obtained over the time; CP length values range from 1 to 7.5 RTS/CTS$_{time}$ with a step of 0.5. CP length variation is normalised in terms of RTS/CTS exchange time, where

$$RTS/CTS_{time} = DIFS + Tx\_time_{RTS} + Tx\_time_{CTS} + 2 \times SIFS.$$

The calculation of the RTS/CTS$_{time}$ is dependent on the physical layer simulation parameters, such as transmission rate. In the above formula DIFS denotes the distributed coordination function inter frame space. The DIFS is used when a station decides to start a transmission. A station can transmit if it senses the medium free for DIFS. SIFS denotes the short inter frame space. The SIFS is the shortest of inter frame spaces. It is used when a station has seized the medium and needs to keep it for the duration of the frame exchange sequence to be performed. The normalisation above is made to give a rough idea about how many consecutive successful attempts to reserve the medium could fit during the considered CP in the same communication range.

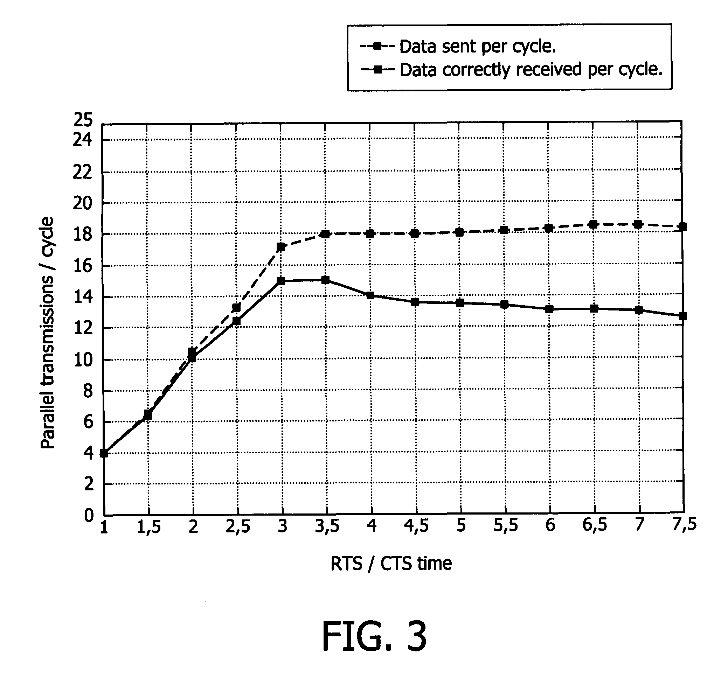

In FIG.3 simulation results for the saturated load situation are shown. The x-axis is the length of control period and the y-axis represents parallel transmissions per cycle. The curve of data sent per cycle represented as a dashed curve grows rapidly and saturates soon since there are no more chances for nodes to access the medium. The increase from 1 to 3 RTS/CTS$_{time}$ is steep, meaning that the enlargement of the CP length gives access to the medium to many more nodes.

With RTS/CTS$_{time}$ values from 3 to 3.5 there is still an improvement in the number of parallel transmissions, even if the curve is not so steep. With RTS/CTS$_{time}$ higher than 3.5 the number of parallel transmissions does not change significantly.

Regarding the curve of data correctly received per cycle represented as a solid curve, it would be reasonable that it follows more or less the behaviour of the data sent per cycle curve. This is true in the steep part, where RTS/CTS$_{time}$ varies from 1 to 3.5. Then the curve decreases smoothly. This is due to an extended inter frame space (EIFS) problem explained below.

This problem was introduced when it was noticed that the curve of data correctly received per cycle in the saturated load scenario was going down when increasing the CP length. This behaviour is not intuitive and it is caused by a particular implementation aspect of the 802.11 MAC. For this purpose deeper explanation of the EIFS is needed.

A node shall use EIFS before a transmission when it determines that the medium is idle following the reception of a frame for which the physical PHY layer indicated the presence an error, without regard to the virtual carrier sense mechanism. The duration of an EIFS for the considered scenario is defined to be 94 μs. The node shall not begin a transmission until the expiration of the later of the network access vector (NAV) and EIFS. The EIFS is defined to provide enough time for another station to acknowledge what was, to this STA, an incorrectly received frame before it commences transmission. Reception of an error-free frame during the EIFS resynchronises the node to the actual busy/idle state of the medium.

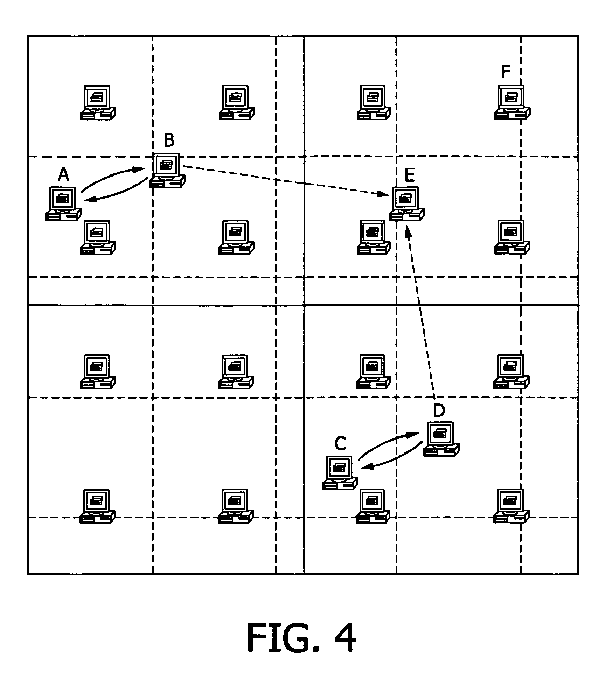

FIG.4 represents a situation that may happen in the implemented scenario. Two couples of stations (A-B and C-D) are trying to reserve the medium in the CP through an RTS/CTS exchange (shown with solid arrows). They infer collisions in multiple nodes in the network. Taking node E for example, it does not receive both the RTS packets sent by A and C; moreover it receives a collision announcement from the PHY layer because both CTSs coming from B and D arrive at E at the same time. Now E establishes a communication with node F, but before that it has to wait for a backoff plus EIFS (instead of backoff plus DIFS) time. This transmission will collide with those from A to B and from C to D at nodes B and D. Transmissions from A to B and from C to D will fail even though they are established correctly.

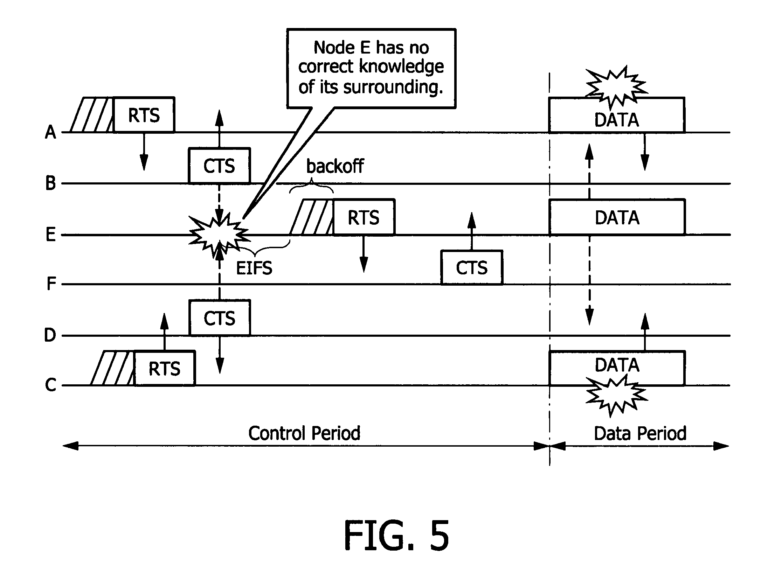

The problem is that E (and other nodes) has not a correct knowledge about what is happening in the network, since it might be inhibited by the CTS reception; on the contrary it starts an attempt to transmit. Different messages sent are also shown in FIG.5.

The EIFS problem is present only when the CP length is large. This is logical because using the EIFS time value instead of DIFS, nodes would have difficulty to fit in the CP, if this is small.

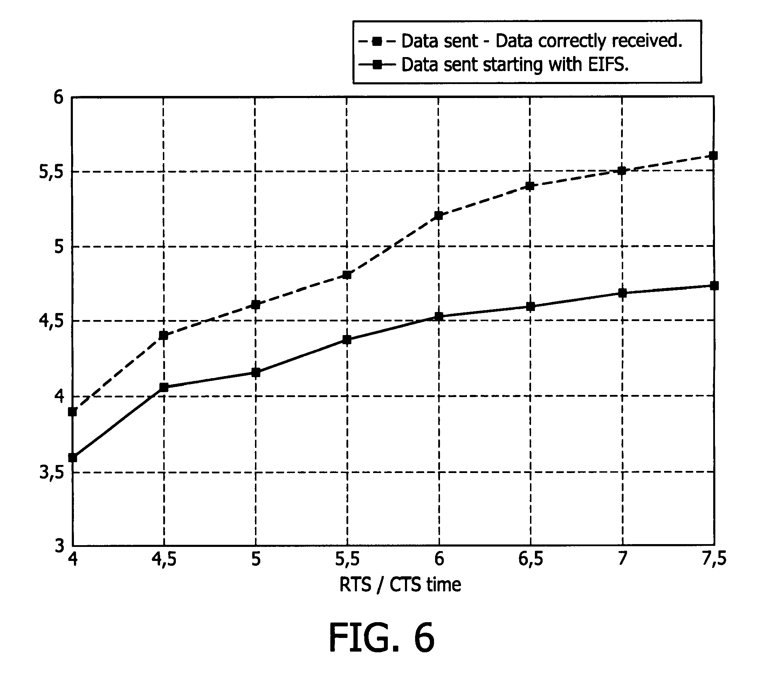

The relationship between the worsening present in the data correctly received curve in the previous scenarios and the EIFS problem is demonstrated through a simulation. Taking the saturated scenario illustrated above, in FIG.6 two curves are represented: the average difference between data sent and data correctly received per cycle represented as a dashed curve and the average amount of data sent per cycle starting with EIFS, i.e. the number of masked nodes in the network represented as a solid curve. Abscissa values are taken starting from CP length of 4 RTS/CTS$_{time}$ because for lower values the EIFS problem does not worsen the performance.

From the figure it can be seen a direct relationship between the two curves since the difference grows when the number of transmissions starting with an EIFS increases. The difference between the curves is higher when the CP length is longer. Proportionality between the two curves explains the strange behaviour of the curve of data correctly received in FIG.3. The EIFS problem is not present in networks with light traffic because collisions happen less frequently.

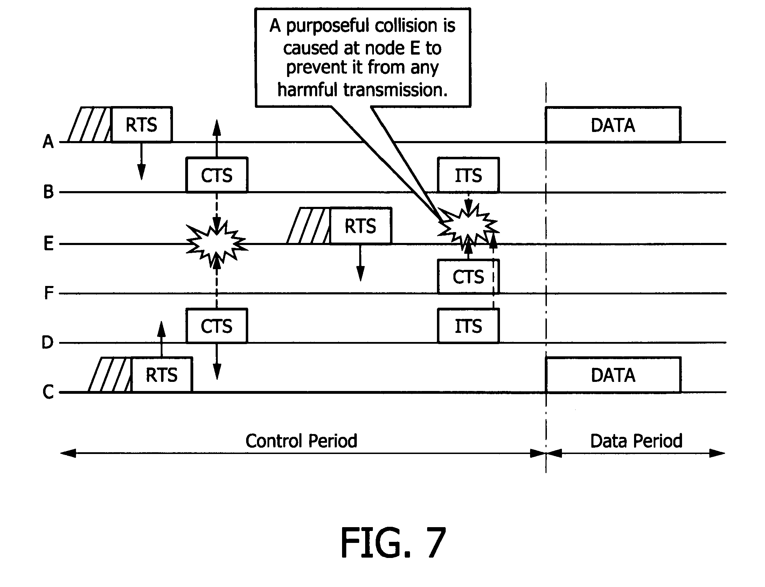

A first embodiment of the present invention will now be described with reference to Figures 4 and 7. In this embodiment nodes A through F are positioned as shown in FIG.4. The message sequence is shown in FIG.7.

Here nodes A/B and nodes C/D have reserved data transfer period by exchanging RTS/CTS control messages first. Node E received collided CTS messages sent out by nodes B and D and it is not aware of reserved data transferring between nodes A/B and nodes C/D. When node E sends out a RTS message to node F indicating its intention of transmitting, node B and/or node D realises that any potential transmission from node E will destroy any reception by them. Hence nodes B and D are in a good position to disable node E from any harmful transmission. To do this, nodes B and D could send out a gratuitous message, called invalid to send (ITS), which indicates a warning. Nodes B and D send out such a message in the control period just after the receipt of the RTS message from node E and thus the ITS messages coincide with the CTS expected from node F to node E. If node F sends out a CTS message, node E will not be able to receive it as the gratuitous message sent by node B and/or node D collide(s) with it. If node F does not respond with a CTS message due to any reason, node E will receive a gratuitous message from either node B or D. As the gratuitous message is invalid to send to node E, this cannot establish its transmission. The transmission from nodes A and C can now be received successfully. Thus the idea is to mitigate the effect of masked nodes by enabling relevant nodes to send gratuitous messages in order to prohibit masked nodes from any harmful transmissions.

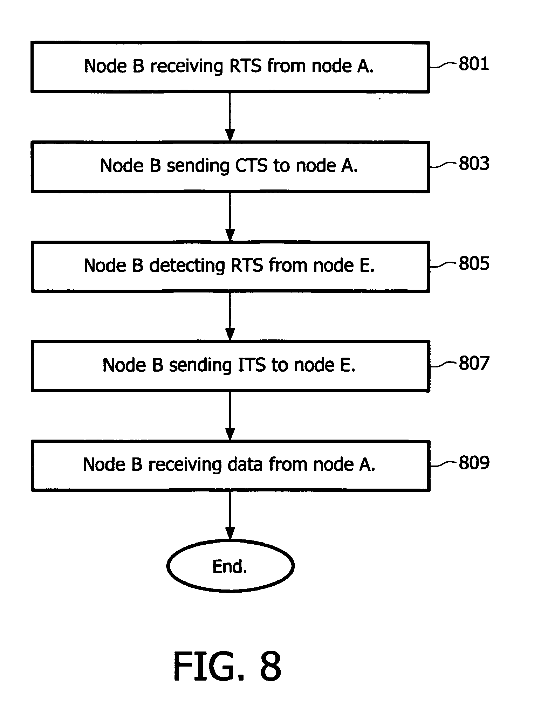

The above method can be described with reference to the flow chart of FIG.8. In the flow chart the method is described from the perspective of node B. First in step 801, node B receives an RTS message from node A. As a response, node B sends in step 803 a CTS message to node A as an indication that it is ready to receive data from node A. Because at the same time also another node in the network, in this case node D, has sent a CTS message and they collide at node E, this node is not aware of the CTS messages sent by nodes B and D. Thus E sends an RTS message, which is received by node B in step 805. Next node B sends in step 807 an ITS message to node E in order to prevent node E from sending data. Now in step 809 node B can start receiving data from node B without being disturbed by node E.

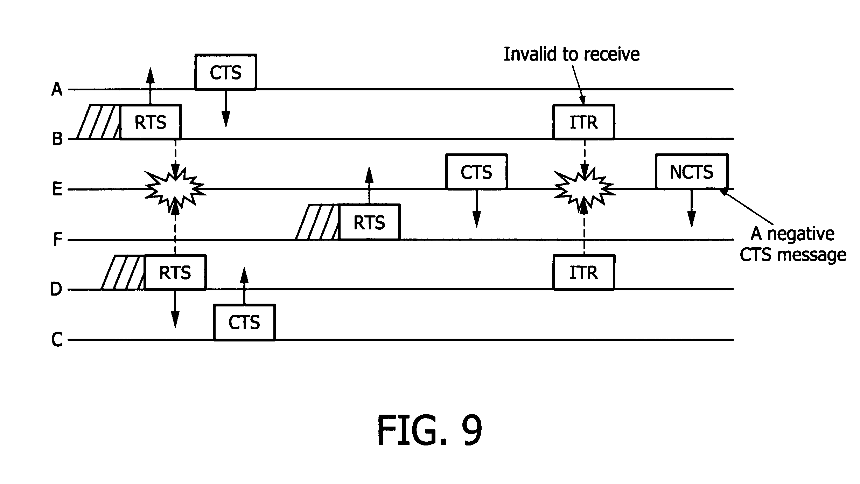

In the first embodiment the masked node is a sender, whereas in the second embodiment the case where the masked node is a receiver is illustrated. The message sequence is shown in FIG.9.

The positions of nodes A through F are still the same as in FIG.4. However, here nodes B and D have first established their transmissions to nodes A and C, respectively. The RTS messages sent out by nodes B and D collide at node E. Hence node E has no knowledge that it is within the range of two senders. Subsequently, node F tries to establish a transmission to node E. Node E sends out a response CTS message to node F. This CTS message is overheard by nodes B and D as they are in the transmission range of node E. Now nodes B and D realise that if node F is allowed to launch data transmission to node E, this would impede their own data transmissions. Therefore, nodes B and/or D send out in the control period an invalid-to-receive (ITR) message to node E. After sending out the CTS message, node E is prepared to listen to its surrounding nodes. If an ITR message or simply a collision occurs, it assumes that there are senders in its surrounding and it should not be able to receive. Node E sends out in the control period a negative CTS immediately to node F, which cancels the previously established transmission. However, the negative CTS may be subject to a potential collision at node F. Hence it may not be always reliable to cancel the transmission.

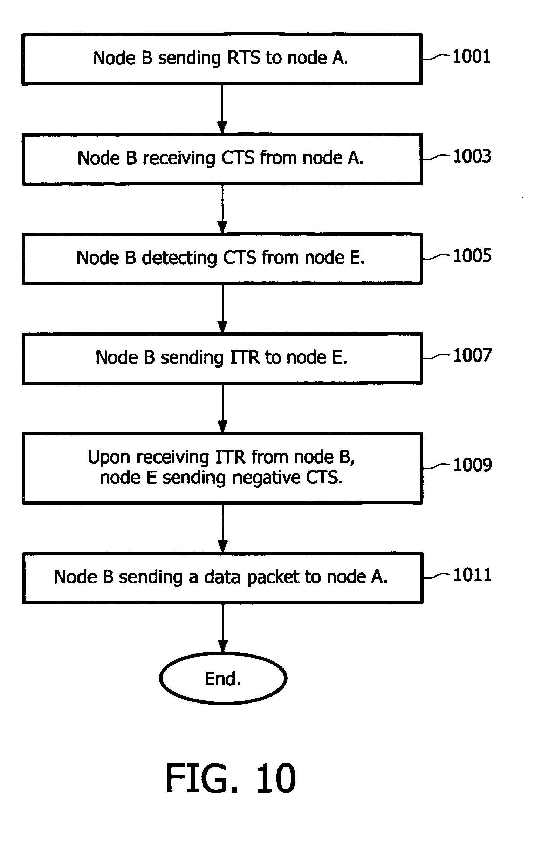

The second embodiment of the invention can also be described with reference to the flow chart of FIG.10. In FIG.10, the method is described from the perspective of node B. In step 1001, node B sends an RTS message to node A. As a response node A responds with a CTS message and this message is received in step 1003 by node B. As there is also another node, in this case node D, in the network that has sent an RTS message, node F does not realise that the network resources are reserved and thus node F sends an RTS message to node E. Node E then responds to this message by sending a CTS message, which is received in step 1005 by node B. Next in step 1007 node B sends an ITR message to node E in order to prevent node E from receiving data messages and to eventually prevent node F from sending data messages. The ITR message may thus include information to node E to further send a negative CTS to node F in order to prevent node F from sending data messages. This being the case, node E sending in step 1009 a negative CTS to node F. Then node B can send in step 1011 a data packet to node A without being disturbed by transmissions from node F.

The teachings of the present invention can be applied widely to many protocol solutions for multi-hop networks in which separation between control and data is done either in time domain or frequency domain. Hence it is applicable to WLAN and wireless personal area networks (WPANs) such as ZigBee.

The invention equally relates to a computer program product that is able to implement any of the method steps of the embodiments of the invention when loaded and run on computer means of the nodes of the communication network. The computer program may be stored/distributed on a suitable medium supplied together with or as a part of other hardware, but may also be distributed in other forms, such as via the Internet or other wired or wireless telecommunication systems.

The invention equally relates to an integrated circuit that is arranged to perform any of the method steps in accordance with the embodiments of the invention.

While the invention has been illustrated and described in detail in the drawings and foregoing description, such illustration and description are to be considered illustrative or exemplary and not restrictive; the invention is not restricted to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

**Claims**

1. A method of reducing occurrence of masked nodes in a communication network comprising at least a first node (A), a second node (B) and a third node (E), the nodes operating in the same frequency band and wherein the first node (A) and the second node (B) are within the radio communication range of each other, the method comprises the following steps performed by the second node (B):

   - exchanging (801, 803, 1001, 1003) control information with the first node (A) for establishing a first data communication link between them;
   - detecting (805, 1005) a message indicating an intention of the third node (E) to establish another data communication link, which would interfere with the first data communication link; and
   - preventing (807, 1007) the third node (E) from establishing the other data communication link, wherein the step of preventing comprises the second node (B) sending (807) a data packet to the third node (E) for preventing the third node (E) from sending data packets, by transmitting the data packet so that said data packet coincides with a message expected by the third node for establishing the other data communication link.

2. The method according to claim 1, wherein exchanging comprises exchanging (801, 803, 1001, 1003) a request to send message and a clear to send message with the first node (A).

3. The method according to any of the preceding claims, wherein the third node (E) is masked by the control information exchanged between the first (A) and second nodes (B).

4. The method according to any of the preceding claims, wherein separation between control information and data is done in time domain or frequency domain and wherein in a control period the third node (E) is prevented from establishing the data communication link.

5. A computer program product comprising instructions for implementing the steps of a method according to any one of claims 1 through 4 when loaded and run on computer means of the second node (B).

6. A node (B) for a wireless communication network further comprising a second node (A) and a third node (E), the nodes being arranged to operate in the same frequency band and wherein the node (B) and the second node (A) are within a radio communication range of each other, the node (B) comprises:

   - means for exchanging control information with the second node (A) for establishing a first data communication link between them;
   - means for detecting a message indicating an intention of the third node (E) to establish another data communication link, which would interfere with the first data communication link; and
   - means for preventing the third node (E) from establishing the other data communication link, wherein the means for preventing the third node (E) from establishing the data link communication link comprises means for sending a data packet to the third node (E) so that said data packet coincides with a message expected by the third node for establishing the other data communication link.

**Patentansprüche**

1. Verfahren zur Reduzierung des Auftretens maskierter Knoten in einem Kommunikationsnetzwerk mit mindestens einem ersten Knoten (A), einem zweiten Knoten (B) und einem dritten Knoten (E), wobei die Knoten in dem gleichen Frequenzband arbeiten und wobei sich der erste Knoten (A) und der zweite Knoten (B) in Funkkommunikationsreichweite zueinander befinden, wobei das Verfahren die folgenden durch den zweiten Knoten (B) durchgeführten Schritte umfasst:

- Austauschen (801, 803, 1001, 1003) von Steuerungsinformationen mit dem ersten Knoten (A) zum Aufbauen einer ersten Datenkommunikationsverbindung zwischen ihnen;
- Detektieren (805, 1005) einer Nachricht, die eine Absicht des dritten Knotens (E) zum Aufbauen einer weiteren Datenkommunikationsverbindung angibt, welche sich mit der ersten Datenkommunikationsverbindung überlagern würde; und
- Hindern (807, 1007) des dritten Knotens (E) am Aufbauen der weiteren Datenkommunikationsverbindung, wobei der Schritt des Hinderns umfasst, dass der zweite Knoten (B) ein Datenpaket an den dritten Knoten (E) sendet (807), um den dritten Knoten (E) am Senden von Datenpaketen zu hindern, indem das Datenpaket so übertragen wird, dass das genannte Datenpaket mit einer Nachricht zusammenfällt, die von dem dritten Knoten zum Aufbauen der weiteren Datenkommunikationsverbindung erwartet wird.

2. Verfahren nach Anspruch 1, wobei das Austauschen das Austauschen (801, 803, 1001, 1003) einer Sendeanforderungsnachricht und einer Sendeerlaubnisnachricht mit dem ersten Knoten (A) umfasst.

3. Verfahren nach einem der vorhergehenden Ansprüche, wobei der dritte Knoten (E) durch die zwischen dem ersten (A) und dem zweiten (B) Knoten ausgetauschten Steuerungsinformationen maskiert ist.

4. Verfahren nach einem der vorhergehenden Ansprüche, wobei die Trennung zwischen Steuerungsinformationen und Daten im Zeitbereich oder im Frequenzbereich erfolgt und wobei der dritte Knoten (E) in einer Steuerungsperiode daran gehindert wird, die Datenkommunikationsverbindung aufzubauen.

5. Computerprogrammprodukt mit Anweisungen zum Ausführen der Schritte eines Verfahrens nach einem der Ansprüche 1 bis 4, wenn es auf Computermitteln des zweiten Knotens (B) geladen und ausgeführt wird.

6. Knoten (B) für ein drahtloses Kommunikationsnetzwerk, das weiterhin einen zweiten Knoten (A) und einen dritten Knoten (E) umfasst, wobei die Knoten vorgesehen sind, um in dem gleichen Frequenzband zu arbeiten, und wobei sich der Knoten (B) und der zweite Knoten (A) in Funkkommunikationsreichweite zueinander befinden, wobei der Knoten (B) Folgendes umfasst:

   - Mittel zum Austauschen von Steuerungsinformationen mit dem zweiten Knoten (A) zum Aufbauen einer ersten Datenkommunikationsverbindung zwischen ihnen;
   - Mittel zum Detektieren einer Nachricht, die eine Absicht des dritten Knotens (E) zum Aufbauen einer weiteren Datenkommunikationsverbindung angibt, welche sich mit der ersten Datenkommunikationsverbindung überlagern würde; und
   - Mittel zum Hindern des dritten Knotens (E) am Aufbauen der weiteren Datenkommunikationsverbindung, wobei die Mittel zum Hindern des dritten Knotens (E) am Aufbauen der Datenkommunikationsverbindung Mittel zum Senden eines Datenpakets an den dritten Knoten (E) umfassen, so dass das genannte Datenpaket mit einer Nachricht zusammenfällt, die von dem dritten Knoten zum Aufbauen der weiteren Datenkommunikationsverbindung erwartet wird.

**Revendications**

1. Procédé de réduction d'occurrence de noeuds masqués dans un réseau de communication comprenant au moins un premier noeud (A), un deuxième noeud (B) et un troisième noeud (E), les noeuds fonctionnant dans la même bande de fréquences et dans lequel le premier noeud (A) et le deuxième noeud (B) sont dans la plage de communication radio l'un de l'autre, le procédé comprenant les étapes suivantes effectuées par le deuxième noeud (B) :

   - l'échange (801, 803, 1001, 1003) d'informations de commande avec le premier noeud (A) pour établir une première liaison de communication de données entre eux ;
   - la détection (805, 1005) d'un message indiquant une intention du troisième noeud (E) d'établir une autre liaison de communication de données qui interférerait avec la première liaison de communication de données ; et
   - l'interdiction (807, 1007) au troisième noeud (E) d'établir l'autre liaison de communication de données, dans lequel l'étape d'interdiction comprend l'envoi (807) par le deuxième noeud (B) d'un paquet de données au troisième noeud (E) pour interdire au troisième noeud (E) d'envoyer des paquets de données, en transmettant le paquet de données de sorte que ledit paquet de données coïncide avec un message attendu par le troisième noeud pour établir l'autre liaison de communication de données.

**2.** Procédé selon la revendication 1, dans lequel l'échange comprend l'échange (801, 803, 1001, 1003) d'un message de demande d'envoi et d'un message de signal de voie libre avec le premier noeud (A).

**3.** Procédé selon l'une quelconque des revendications précédentes, dans lequel le troisième noeud (E) est masqué par les informations de commande échangées entre le premier noeud (A) et le deuxième noeud (B).

**4.** Procédé selon l'une quelconque des revendications précédentes, dans lequel une séparation entre des informations de commandes et des données est effectuée dans un domaine de temps ou dans un domaine de fréquences et dans lequel au cours d'une période de commande il est interdit au troisième noeud (E) d'établir la liaison de communication de données.

**5.** Produit de programme informatique comprenant des instructions pour mettre en oeuvre les étapes d'un procédé selon l'une quelconque des revendications 1 à 4 lorsqu'il est chargé et exécuté sur un moyen informatique du deuxième noeud (B).

**6.** Noeud (B) pour un réseau de communication sans fil comprenant en outre un deuxième noeud (A) et un troisième noeud (E), les noeuds étant agencés pour fonctionner dans la même bande de fréquences et dans lequel le noeud (B) et le deuxième noeud (A) sont dans une plage de communication radio l'un de l'autre, le noeud (B) comprenant :

- un moyen destiné à échanger des informations de commande avec le deuxième noeud (A) pour établir une première liaison de communication de données entre eux ;
- un moyen destiné à détecter un message indiquant une intention du troisième noeud (E) d'établir une autre liaison de communication de données qui interférerait avec la première liaison de communication de données ; et
- un moyen destiné à interdire au troisième noeud (E) d'établir l'autre liaison de communication de données, dans lequel le moyen destiné à interdire au troisième noeud (E) d'établir la liaison de communication de données comprend un moyen destiné à envoyer un paquet de données au troisième noeud (E) de sorte que ledit paquet de données coïncide avec un message attendu par le troisième noeud pour établir l'autre liaison de communication de données.

FIG. 1

FIG. 2

FIG. 3

FIG. 4

FIG. 5

EP 2 198 658 B1

FIG. 6

FIG. 7

Node B receiving RTS from node A. ⎯801

Node B sending CTS to node A. ⎯803

Node B detecting RTS from node E. ⎯805

Node B sending ITS to node E. ⎯807

Node B receiving data from node A. ⎯809

End.

# FIG. 8

FIG. 9

EP 2 198 658 B1

```
┌─────────────────────────────────────────┐
│      Node B sending RTS to node A.        │────1001
└─────────────────────────────────────────┘
                    │
                    ▼
┌─────────────────────────────────────────┐
│     Node B receiving CTS from node A.     │────1003
└─────────────────────────────────────────┘
                    │
                    ▼
┌─────────────────────────────────────────┐
│     Node B detecting CTS from node E.     │────1005
└─────────────────────────────────────────┘
                    │
                    ▼
┌─────────────────────────────────────────┐
│      Node B sending ITR to node E.        │────1007
└─────────────────────────────────────────┘
                    │
                    ▼
┌─────────────────────────────────────────┐
│     Upon receiving ITR from node B,       │────1009
│       node E sending negative CTS.        │
└─────────────────────────────────────────┘
                    │
                    ▼
┌─────────────────────────────────────────┐
│   Node B sending a data packet to node A. │────1011
└─────────────────────────────────────────┘
                    │
                    ▼
                ╭─────────╮
                │  End.   │
                ╰─────────╯
```

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050058151 A